# EUROPEAN PATENT SPECIFICATION

(11) **EP 4 174 799 B1**
(45) Date of publication and mention of the grant of the patent: **01.04.2026**
(21) Application number: 21204773.2
(22) Date of filing: 26.10.2021
(51) Int. Cl.: G06V 20/58

(54) **ADS PERCEPTION SYSTEM PERCEIVED FREE-SPACE VERIFICATION**
WAHRGENOMMENE FREIRAUMVERIFIZIERUNG EINES WERBEANZEIGEWAHRNEHMUNGSSYSTEMS
VÉRIFICATION DE L'ESPACE LIBRE PERÇU DE SYSTÈME DE PERCEPTION DE PUBLICITÉS

(43) Date of publication of application: 03.05.2023
(73) Proprietor: Zenseact AB, 417 56 Göteborg (SE)
(72) Inventor: SVENSSON, Daniel, 414 59 Göteborg (SE); BACKHOUSE, Andrew, 417 68 Göteborg (SE); FATEMI DEZFOULI, Maryam, 417 61 Göteborg (SE)
(74) Representative: Zacco Sweden AB

(56) References cited:
- WO-A1-2021/092702
- KR-A- 20170 116 305
- US-A1- 2020 249 356
- ANONYMOUS: "Track-Level Fusion of Radar and Lidar Data - MATLAB & Simulink - MathWorks Benelux", 19 March 2020 (2020-03-19), pages 1 - 16, XP055849990, Retrieved from the Internet <URL:https://nl.mathworks.com/help/releases/R2020a/fusion/examples/track-level-fusion-of-radar-and-lidar-data.html> [retrieved on 20211011]
- SANG-IL OH ET AL: "Object Detection and Classification by Decision-Level Fusion for Intelligent Vehicle Systems", SENSORS, vol. 17, no. 12, 22 January 2017 (2017-01-22), pages 207, XP055546817, DOI: 10.3390/s17010207

## Description

### TECHNICAL FIELD

The present disclosure relates to supporting and/or providing confidence in that a perception system of a vehicle ADS detects presence of objects.

### BACKGROUND

Within the automotive field, there has for quite some years been activity in development of autonomous vehicles. An increasing number of modern vehicles have advanced driver-assistance systems, ADAS, to increase vehicle safety and more generally road safety. ADAS - which for instance may be represented by collision avoidance system, forward collision warning, etc. - are electronic systems that may aid a vehicle driver while driving. Moreover, in a not-too-distant future, Autonomous Driving, AD, will to greater extent find its way into modern vehicles. AD along with ADAS will herein be referred to under the common term Automated Driving System, ADS, corresponding to all different levels of automation, for instance as defined by the SAE J3016 levels (0 - 5) of driving automation. An ADS may be construed as a complex combination of various components that can be defined as systems where perception, decision making, and operation of the vehicle - at least in part - are performed by electronics and machinery instead of a human driver. This may include handling of the vehicle, destination, as well as awareness of surroundings. While the automated system has control over the vehicle, it allows the human operator to leave all or at least some responsibilities to the system. To perceive its surroundings, an ADS commonly combines a variety of sensors, such as e.g. radar, LIDAR, sonar, camera, navigation and/or positioning system e.g. GNSS such as GPS, odometer and/or inertial measurement units, upon which advanced control systems may interpret sensory information to identify appropriate navigation paths, as well as obstacles and/or relevant signage.

The design of an ADS puts strict requirements on the environmental perception capability of the system. More specifically, it puts requirements on not failing to report critical objects that the ADS-equipped vehicle potentially can collide with. For a perception system of the ADS, a problem may be to find the most accurate representation of the objects in the outside world without missing vital objects or reporting objects where none exist. It may be noted that a perception system may be unable to report everything, although this is typically not a problem. A known degree of sensor inaccuracy, as well as objects that are missed for short durations, or which are further away than what the accompanying sensor system can handle, may be tolerable.

The output from a perception system may have many different consumers, and the perception system may therefore have multiple, potentially conflicting, requirements allocated to it. This means that a perception system may need to simultaneously fulfil many different requirements. It is of importance that the perception system does not fail to report the presence of a critical object. This requirement is particularly important for autonomous vehicles, since the tolerable frequency that a self-driving vehicle collides with another road user is exceptionally low, and this is a possible consequence should a perception system fail to report all objects. When the perception system knows that it might have missed crucial information, the vehicle may - e.g. by means of decision and control algorithms of e.g. a decision and control system of the ADS - be slowed down or instructed to perform some other minimal risk manoeuvre. The tolerable frequency with which a self-driving vehicle may perform such a minimal risk manoeuvre is low; however, the tolerable frequency is many orders of magnitude higher than the tolerable frequency of colliding with another road user. There is a need for indicating to a consumer of a perception system - such as e.g. to a decision and control module governing vehicle path planning - whenever objects within a critical region potentially may have been missed, such as for longer than a manageable duration.

### SUMMARY OF THE INVENTION

It is therefore an object of embodiments herein to provide an approach for in an improved and/or alternative manner support and/or provide confidence in that a perception system of a vehicle ADS detects presence of objects.

The disclosed subject-matter relates to a method performed by a free-space verification system (1) for supporting and/or providing confidence that a perception system (22) of an Automated Driving System, ADS (21), of a vehicle (2) accurately detects the presence of objects, said method comprising: obtaining (1001) sensor data (230) of vehicle surroundings with support from vehicle-mounted surrounding detecting sensors (23); generating (1002) perception data (220) of vehicle surroundings by fusing said sensor data (230) with support from said perception system (22); determining (1003) that the perception system (22), by assessing said perception data (220), perceives at least a first predeterminable zone (31) in the vehicle surroundings as free from critical objects; evaluating (1004) separate from one another, the sensor data (2310, 23n0) obtained from one or more of said surrounding detecting sensors (23), to encounter potential sensor-specific detections in an at least first predeterminable extended zone (311) at least partly encompassing said at least first zone (31); determining (1005) individually pertinent respective surrounding detecting sensors (23) or sensor-specific modality, whether potential sensor-specific detections within said at least first extended zone (311) comply with at least a first free-space verifying criterium stipulating one or more conditions under which said at least first zone is deemed object-free; and determining (1005) when compliance for a predefined number and/or combination of the surrounding detecting sensors (23), that said at least first zone (31) is verified as object-free, wherein said at least first free-space verifying criterium comprises: existence in the at least first extended zone (311) of fewer than a predeterminable minimum number of detections; and/or existence in the at least first extended zone (311) of at least said minimum number of detections but which detections are not within a predeterminable maximum proximity signifying a single object; and/or existence in the at least first extended zone (311) of at least said minimum number of detections out of which a predeterminable number of the detections are within said maximum proximity signifying a single object but which detections imply that a current position of said single object lies not within the at least first zone (31).

The disclosed subject-matter further relates to a free-space verification system (1) for supporting and/or providing confidence that a perception system (22) of an Automated Driving System, ADS (21), of a vehicle (2) accurately detects the presence of objects, said free-space verification system (1) comprising: a sensor data obtaining unit (101) for obtaining (1001) sensor data (230) of vehicle surroundings with support from vehicle-mounted surrounding detecting sensors (23); a perception data generating unit (102) for generating (1002) perception data (220) of vehicle surroundings by fusing said sensor data (230) with support from said perception system (22); a free-space determining unit (103) for determining (1003) that the perception system (22), by assessing said perception data (220), perceives at least a first predeterminable zone (31) in the vehicle surroundings as free from critical objects; an evaluating unit (104) for evaluating (1004) separate from one another, the sensor data (2310, 23n0) obtained from one or more of said surrounding detecting sensors (23), to encounter potential sensor-specific detections in an at least first predeterminable extended zone (311) at least partly encompassing said at least first zone (31); and a verification determining unit (105) for determining (1005) individually pertinent respective surrounding detecting sensors (23) or sensor-specific modality, whether potential sensor-specific detections within said at least first extended zone (311) comply with at least a first free-space verifying criterium stipulating one or more conditions under which said at least first zone is deemed object-free; said verification determining unit (105) further being adapted for determining (1005) when compliance for a predefined number and/or combination of the surrounding detecting sensors (23), that said at least first zone (31) is verified as object-free, wherein said at least first free-space verifying criterium comprises: existence in the at least first extended zone (311) of fewer than a predeterminable minimum number of detections; and/or existence in the at least first extended zone (311) of at least said minimum number of detections but which detections are not within a predeterminable maximum proximity signifying a single object; and/or existence in the at least first extended zone (311) of at least said minimum number of detections out of which a predeterminable number of the detections are within said maximum proximity signifying a single object but which detections imply that a current position of said single object lies not within the at least first zone (31).

Furthermore, the disclosed subject-matter relates to a vehicle comprising a free-space verification system as described herein.

Moreover, the disclosed subject-matter relates to a computer program product comprising a computer program containing computer program code means arranged to cause a computer or a processor to execute the steps of the free-space verification system described herein, stored on a computer-readable medium or a carrier wave.

The disclosed subject-matter further relates to a non-volatile computer readable storage medium having stored thereon said computer program product.

Thereby, there is introduced an approach according to which free-space perceived by a perception system, may be verified. That is, since there is obtained sensor data of vehicle surroundings with support from vehicle-mounted surrounding detecting sensors, there is as the vehicle is travelling obtained continuously and/or intermittently - and potentially further stored in separate data buffers for separate surrounding detecting sensors or separate sensor modalities - sensor data of the surroundings of the vehicle. Accordingly, for e.g. a first surrounding detecting sensor - or for a first type or modality of surrounding detecting sensors such as e.g. camera - sensor data of said first surrounding detecting sensor(s) may be obtained, collected and/or stored e.g. in a first sensor/modality-specific data buffer e.g. during a predeterminable time period and/or number of samples, whereas for an n^{th} surrounding detecting sensor - or for an n^{th} type or modality of surrounding detecting sensors such as e.g. radar - sensor data of said n^{th} surrounding detecting sensor(s) may in a similar manner be obtained, collected and/or stored e.g. in an n^{th} sensor/modality-specific data buffer e.g. during a predeterminable time period and/or number of samples. Respective sensor data - which throughout the disclosure likewise may be referred to as sensor-specific sensor data, sensor/modality-specific sensor data and/or historical sensor data - may thus differ from one sensor and/or sensor-specific modality to another and may further reveal differences and/or slight variations, at least to some extent, in terms of sensed objects and/or detections thereof in the vehicle surroundings during corresponding time interval(s). Furthermore, that is, since there is generated perception data of vehicle surroundings based on fusing the sensor data with support from the perception system, said perception system creates - using as input sensor data from one or more of the surrounding detecting sensors - an environmental description of the vehicle surroundings with respect to potential static and/or dynamic objects. Accordingly, a world view and/or world view data of the vehicle's surroundings is produced, for instance with support from a - e.g. commonly known - digital map such as a high definition, HD, map, and/or an equivalent and/or successor thereof. Moreover, that is, since there is determined that the perception system based on the perception data perceives at least a first zone in the vehicle surroundings, free from objects, the perception system establishes that there are no objects - such as safety critical objects and/or other road users e.g. other vehicles, vulnerable road users, animals of considerable and/or sufficient size such as elks, dogs, cats etc. - perceived in at least a first zone in the vehicle's surroundings, such as in a predeterminable zone of a state space of the vehicle within which potential objects potentially may be located. Furthermore, that is, since there is evaluated for one or more of the surrounding detecting sensors their respective obtained sensor data separately, to encounter potential sensor-specific detections in an at least first extended zone at least partly encompassing the at least first zone, there may be assessed for one or more respective surrounding detecting sensors - and/or respective sensor-specific modality - irrespective of one another, whether there in their respective historical sensor data - which optionally may range back a respective predeterminable time period and/or number of samples - exist object detection(s) in an - e.g. circumstances- and/or velocity-dependent - enlarged zone overlapping the at least first zone. Such potential detections of object(s) - and/or potential movement thereof - in the at least first extended zone, may depending on their circumstances - as will be described further on - suggest and/or insinuate object presence in the at least first zone. Furthermore, since the sensor/modality-specific sensor data - and subsequently potential detections of an object and/or objects in the vehicle surroundings - may differ from one sensor to another, so may the outcome of respective evaluation. Accordingly, by analyzing respective historical sensor/modality-specific sensor data individually, such as for e.g. camera(s) and e.g. radar(s) separately, it may be derived whether any one surrounding detecting sensor - and/or sensor-specific modality - or even several thereof, albeit the perception module perceiving the at least first zone free from objects, have detected object(s) in the expanded zone encompassing the at least first zone, which in turn may imply the possibility that there nonetheless may be object(s) present in the at least first zone. Moreover, that is, since there is determined when respective potential sensor-specific detections within the at least first extended zone, for a predeterminable number of and/or combination of the surrounding detecting sensors, comply with at least a first free-space verifying criterium, that the at least first zone is verified as object-free, there is - in a joint decision from the free-space verification system - concluded that the at least first zone is verified free from objects provided that - for a sufficient number of surrounding detecting sensors and/or for a sufficient combination of surrounding detecting sensors - respective sensor's extended zone-related potential object detections fulfill one or more criteria stipulating conditions under which - for the corresponding surrounding detecting sensor and/or sensor-specific modality - the at least first zone is deemed object-free. That is, should the outcome of assessing the sensor-specific potential object detections - in view of the at least first free-space verifying criterium - for separate surrounding detecting sensors individually, be that said at least first zone is deemed to - for at least the predeterminable number and/or combination of surrounding detecting sensors separately - be free of objects, then the free-space verification system may verify that as true. Accordingly, confidence may be provided for when a perception system perceives - and potentially reports to potential consumer(s) such as e.g. a decision and control module - non-presence of objects, with the free-space verification system providing the ability to with support from a voting schema of sorts confirm whether it agrees or not with that such is the case by assessing respective history sensor data for different surrounding detecting sensors individually, as described herein.

For that reason, an approach is provided for in an improved and/or alternative manner support and/or provide confidence in that a perception system of a vehicle ADS detects presence of objects.

### BRIEF DESCRIPTION OF THE DRAWINGS

The various aspects of the non-limiting embodiments, including particular features and advantages, will be readily understood from the following detailed description and the accompanying drawings, in which:
**Fig. 1** illustrates a schematic view of an exemplifying free-space verification system according to embodiments of the disclosure;
**Fig. 2** is a schematic block diagram illustrating an exemplifying free-space verification system according to embodiments of the disclosure;
**Fig. 3** is a flowchart depicting an exemplifying method performed by a free-space verification system according to embodiments of the disclosure; and
**Fig. 4** illustrates a schematic block diagram of an exemplifying setup supporting an exemplifying free-space verification system according to embodiments of the disclosure.

### DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to supporting and/or providing confidence in that a perception system of an ADS of a vehicle detects presence of objects, there will be disclosed an approach according to which free-space perceived by a perception system, may be verified.

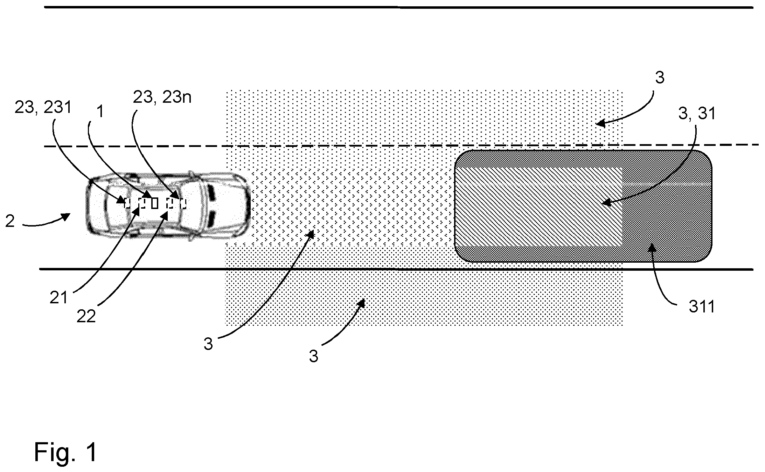

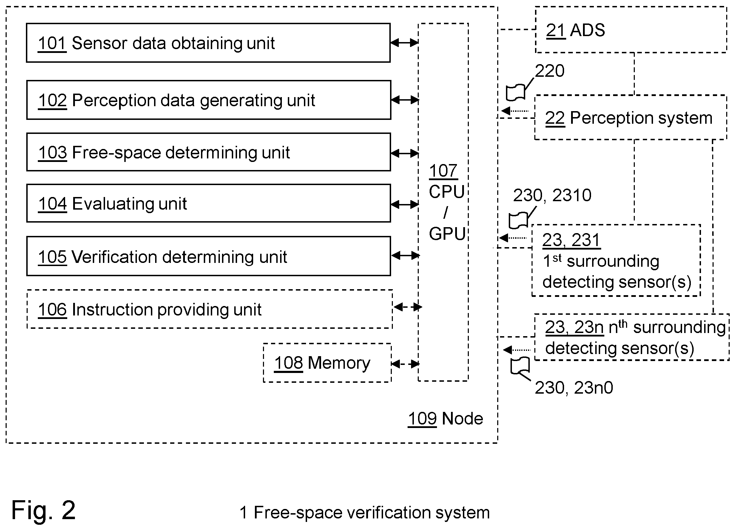

Referring now to the figures, there is depicted in **Fig. 1** a schematic view of an exemplifying **free-space verification system 1** according to embodiments of the disclosure, and in **Fig. 2** depicted a schematic block diagram of an exemplifying free-space verification system 1 according to embodiments of the disclosure. The free-space verification system 1 is adapted for supporting and/or providing confidence in that a **perception system 22** of an **ADS 21** of a **vehicle 2** detects presence of objects, such as safety critical objects and/or other road users e.g. other vehicles, vulnerable road users, animals of considerable and/or sufficient size such as elks, dogs, cats etc.

The vehicle 2 - which may be referred to as ego-vehicle or host vehicle - may be represented by any arbitrary - e.g. known - manned or unmanned vehicle, for instance an engine-propelled or electrically-powered vehicle such as a car, truck, lorry, van, bus and/or tractor. Moreover, the term "vehicle" may refer to "autonomous and/or at least partly autonomous vehicle", "driverless and/or at least partly driverless vehicle", and/or "self-driving and/or at least partly self-driving vehicle". Moreover, the ADS 21 of and/or for the vehicle 2 may be represented by any arbitrary ADAS or AD system e.g. known in the art and/or yet to be developed. Furthermore, the perception system 22 - which may also be referred to as environmental perception system, sensor fusion module and/or perception module - be represented by any - e,g, known - system and/or functionality, e.g. comprised in one or more electronic control modules, ECUs, and/or nodes of the vehicle 2 and/or the ADS 21, adapted and/or configured to interpret sensory information - relevant for driving of the vehicle 2 - to identify e.g. objects, obstacles, vehicle lanes, relevant signage, appropriate navigation paths etc. The perception system 22 - which may be adapted to support e.g. sensor fusion, tracking, localization etc. - may thus be adapted to rely on sensory information. Such exemplifying sensory information may for instance be derived from one or more - e.g. commonly known - sensors comprised in and/or provided onboard the vehicle 2 - herein also referred to as vehicle-mounted and/or onboard sensors - adapted to sense and/or perceive the vehicle's 2 whereabouts and/or surroundings, for instance represented by one or a combination of one or more of **surrounding detecting sensors 23,** such as image capturing devices e.g. cameras, LIDARs, RADARs, ultrasonic sensors etc., and/or a positioning system, odometer, inertial measurement units etc. In other words, a perception system 22 is in the present context thus to be understood as a module and/or system responsible for acquiring raw sensor data from onboard sensors and converting this raw data into scene understanding.

The phrase "free-space verification system" may refer to "perception confidence system", "free-space validation and/or confirming system", "object-absence validator" and/or "assessment system", whereas "a method performed by a free-space verification system" may refer to "an at least partly computer-implemented method performed by a free-space verification system". "For supporting and/or providing confidence in that [...] detects presence of objects", on the other hand, may refer to "for supporting the confidence in that [...] detects presence of objects", "for supporting and/or providing confidence in that [...] has detected presence of objects" and/or "for supporting and/or providing confidence in [...] detecting presence of objects", whereas "objects" throughout the disclosure according to an example may refer to "critical objects", "safety critical objects", "objects with which said vehicle potentially may collide", "objects deemed to cause harm and/or be harmed in a potential collision with said vehicle" and/or "other road users". Furthermore, according to an example, the phrase "for supporting and/or providing confidence in that a perception system of an ADS of a vehicle detects presence of objects" may refer to "for supporting that a perception system of an ADS of a vehicle does not miss presence of objects", "for supporting that a perception system of an ADS of a vehicle does not fail to report, e.g. to a consumer of its output and/or to a decision and control module, presence of objects", and/or "for supporting verification of free space perceived by a perception system of an ADS of a vehicle". Moreover, "ADS of a vehicle" may refer to "ADS for a vehicle".

As illustrated in an exemplifying manner in exemplifying Figs. 1 and 2, the free-space verification system 1 is - e.g. by means of a **sensor data obtaining unit 101** - adapted and/or configured for obtaining **sensor data 230** of vehicle surroundings with support from vehicle-mounted surrounding detecting sensors 23. Thereby, as the vehicle 2 is travelling, there is obtained continuously and/or intermittently - and potentially further stored in separate data buffers for separate surrounding detecting sensors 23 or separate sensor modalities - sensor data 230 of the surroundings of the vehicle 2. Accordingly, as depicted in an exemplifying manner in Figs. 1-2, for a **first surrounding detecting sensor 231** - or for a first type or modality of surrounding detecting sensors 231 such as e.g. camera - **sensor data 2310** of said first surrounding detecting sensor(s) 231 may be obtained, collected and/or stored e.g. in a first sensor/modality-specific data buffer such as a ring buffer e.g. during a predeterminable time period and/or number of samples, whereas for an **n^{th} surrounding detecting sensor 23n** - or for an n^{th} type or modality of surrounding detecting sensors 23n such as e.g. radar - **sensor data 23n0** of said n^{th} surrounding detecting sensor(s) 23n may in a similar manner be obtained, collected and/or stored e.g. in an n^{th} sensor/modality-specific data buffer such as a ring buffer e.g. during a predeterminable time period and/or number of samples. Respective sensor data 2310, 23n0 - which throughout the disclosure likewise may be referred to as sensor-specific sensor data, sensor/modality-specific sensor data and/or historical sensor data - e.g. stored in respective separate sensor/modality-specific buffers, may thus differ from one sensor 23, 231 and/or sensor-specific modality to another 23, 23n, and may further reveal differences and/or slight variations, at least to some extent, in terms of sensed objects and/or detections thereof in the vehicle surroundings during corresponding time interval(s).

The sensor data 230 - subsequently respective sensor/modality-specific sensor data 2310, 23n0 - may be gathered from any feasible number of vehicle-mounted surrounding detecting sensors 23, and correspondingly, a respective predeterminable time interval and/or number of samples during which respective sensor data 2310, 23n0 may be obtained, collected and/or stored may be of any feasible dimensions, such as respective time interval for instance ranging from a few milliseconds up to several seconds or even minutes and/or respective number of samples ranging from merely a few samples up to tens, hundreds or more thereof. Moreover, a respective time duration during which respective sensor/modality-specific data 3210, 32n0 may be gathered may differ from one sensor 23, 231 and/or modality to another 23, 23n.

The phrase "obtaining sensor data" may refer to "gathering and/or collecting sensor data", "obtaining continuously and/or intermittently sensor data" and/or "obtaining respective sensor/modality-specific sensor data", and according to an example further to "obtaining and storing sensor data", "obtaining and storing in respective sensor/modality-specific data buffers, sensor data", "obtaining and storing in respective separate and/or individual sensor/modality-specific data buffers, sensor data", "obtaining and storing in respective sensor/modality-specific data buffers of said free-space verification system and/or said ADS, sensor data" and/or "obtaining and storing in respective sensor/modality-specific data buffers where two or more of said sensor/modality-specific buffers are contained on separate CPUs, sensor data". For the latter case, there is thus a reduced risk of common faults related to hardware, and/or redundancy may be supported in view of hardware failures and/or based software failures. Moreover, "vehicle surroundings" may refer to "surroundings of said vehicle", whereas "with support from vehicle-mounted surrounding detecting sensors" may refer to "utilizing and/or derived from vehicle-mounted surrounding detecting sensors".

As illustrated in an exemplifying manner in exemplifying Fig. 2, the free-space verification system 1 is further - e.g. by means of a **perception data generating unit 102** - adapted and/or configured for generating **perception data 220** of vehicle surroundings based on fusing the sensor data 230, 2310, 23n0 with support from the perception system 22. Thereby, said perception system 22 creates - using as input sensor data 230, 2310, 23n0 from one or more of the surrounding detecting sensors 23, 231, 23n - an environmental description of the vehicle surroundings with respect to potential static and/or dynamic objects. Accordingly, a world view 220 and/or world view data 220 of the vehicle's 2 surroundings is produced, for instance with support from a - e.g. commonly known - digital map such as a high definition, HD, map, and/or an equivalent and/or successor thereof.

The perception data 220 may be based on sensor data 230 from any feasible number of onboard surrounding detecting sensors 23, for instance ranging from a single sensor 23 up to tens or even more sensors 23. Furthermore, the phrase "generating perception data" may refer to "providing, creating and/or producing perception data" and/or "generating continuously and/or intermittently perception data", whereas "perception data of vehicle surroundings" may refer to "perception data of at least a portion of vehicle surroundings". The phrase "based on fusing said sensor data", on the other hand, may refer to "by fusing said sensor data", "based on using as input said sensor data" and/or "based on at least a portion and/or a predeterminable - and/or selectable - portion of said sensor data", and according to an example further to "based on fusing respective sensor/modality-specific sensor data", "based on tracking said sensor data" and/or "based on fusing said sensor data whereby an environmental description of the vehicle surroundings with respect to static and/or dynamic objects is created". Moreover, "with support from said perception system" may refer to "utilizing and/or by means of said perception system", and according to an example further to "with support from at least a first fusion module of said perception system".

As illustrated in an exemplifying manner in exemplifying Figs. 1 and 2, the free-space verification system 1 is further - e.g. by means of a **free-space determining unit 103** - adapted and/or configured for determining that the perception system 22 based on said perception data 220 perceives - optionally and/or potentially out of plural **zones 3** - at least a **first zone 31** in the vehicle surroundings, free from objects. Thereby, the perception system 22 establishes that there are no objects - such as safety critical objects and/or other road users e.g. other vehicles, vulnerable road users, animals of considerable and/or sufficient size such as elks, dogs, cats etc. - perceived in at least a first zone 31 in the vehicle's 2 surroundings, such as in a predeterminable zone 31 of a state space of said vehicle 2 within which potential objects potentially may be located.

The at least first zone 31 - along with the respective further optional zones 3 - in the vehicle surroundings, may be shaped and/or dimensioned in any arbitrary feasible manner as deemed suitable for the application at hand, such as ranging from being less than a meter up to several or tens or even hundreds of meters across in a longitudinal and/or lateral direction of the vehicle 2, respectively, and further be situated at any arbitrary feasible predeterminable angle in view of the vehicle 2 such as in front of, behind and/or sideways thereof, and further be situated at any arbitrary feasible predeterminable distance from the vehicle 2 such as ranging from within less than a meter from the vehicle 2 up to tens or even hundreds of meters therefrom. The at least first zone 31 may further be represented by a - e.g. predeterminable - subset of a state space. A state space for an object may be defined by a vector of variables with which the general state of an object may be described. The at least first zone 31 may be a subset of such a state space and/or object state space.

The phrase "determining that the perception system based on said perception data perceives" may refer to "deriving and/or reading from said perception system that the perception system based on said perception data perceives", "determining that the perception reports that it based on said perception data perceives" and/or determining that the perception system from - and/or from assessing - said perception data perceives". "Perceives [...] free from objects", on the other hand, may refer to "perceives [...] non-presence and/or empty of objects", whereas "objects" according to an example - and as previously discussed - throughout the disclosure may refer to "critical objects", "safety critical objects", "objects with which said vehicle potentially may collide", "objects deemed to cause harm and/or be harmed in a potential collision with said vehicle" and/or "other road users". Furthermore, "zone" may refer to "virtual zone", "state zone" and/or "zone of a state space".

As illustrated in an exemplifying manner in exemplifying Figs. 1 and 2, the free-space verification system 1 is further - e.g. by means of an **evaluating unit 103** - adapted and/or configured for evaluating for one or more of the surrounding detecting sensors 23, 231, 23n their respective obtained sensor data 230, 2310, 23n0 separately, to encounter potential sensor-specific detections in an at least **first extended zone 311** at least partly encompassing the at least first zone 31. Thereby, there may be assessed for one or more respective surrounding detecting sensors 231, 23n - and/or respective sensor-specific modality - irrespective of one another, whether there in their respective historical sensor data 2310, 23n0 - which optionally may range back a respective predeterminable time period and/or number of samples - exist object detection(s) in an - e.g. circumstances- and/or velocity-dependent - enlarged zone 311 overlapping the at least first zone 31. Such potential detections of object(s) - and/or potential movement thereof - in the at least first extended zone 311, may depending on their circumstances - as will be described further on - suggest and/or insinuate object presence in the at least first zone 31. Furthermore, since the sensor/modality-specific sensor data 2310, 23n0 - and subsequently potential detections of an object and/or objects in the vehicle surroundings - may differ from one sensor 231 to another 23n, so may the outcome of respective evaluation. Accordingly, by analyzing respective historical sensor/modality-specific sensor data 2310, 23n0 individually, such as for e.g. camera(s) 231 and e.g. radar(s) 23n separately, it may be derived whether any one surrounding detecting sensor 231, 23n - and/or sensor-specific modality - or even several thereof 231, 23n, albeit the perception module 22 perceiving the at least first zone 31 free from objects, have detected object(s) in the expanded zone 311 encompassing said at least first zone 31, which in turn may imply the possibility that there nonetheless may be object(s) present in the at least first zone 31.

Evaluation of respective sensor data 231, 23n may be carried out for any arbitrary feasible number of surrounding detecting sensors 23, and further for any arbitrary feasible respective predeterminable historical time period and/or number of samples which further may differ between different surrounding detecting sensors 231, 23n. Potential sensor-specific detections, on the other hand, may be represented by any detections - in respective sensor data 231, 23n - of objects deemed relevant, and - as previously discussed - for instance relate to detection of safety critical objects and/or other road users e.g. other vehicles, vulnerable road users, animals of considerable and/or sufficient size such as elks, dogs, cats etc. Furthermore, the at least first zone 31 may be determined and/or dimensioned taking into consideration applicable and/or current circumstances, such as being dependent and/or based on velocity - e.g of the vehicle 2 and/or of a potential encountered detected object - and/or of compute capacity. The first extended zone 311 encompassing the first zone 31 may - along with optional further extended zones respectively potentially encompassing a respective further optional zone 3 - accordingly be shaped and/or dimensioned in any arbitrary feasible manner as deemed suitable for the application at hand and/or be e.g. circumstances-dependent, velocity vector-dependent, vehicle velocity-dependent, encountered object velocity-dependent and/or compute capacity-dependent, and for instance range from being less than a meter up to several or tens or even hundreds of meters across in a longitudinal and/or lateral direction of the vehicle 2, respectively, and further be situated at any arbitrary feasible predeterminable angle in view of the vehicle 2 such as in front of, behind and/or sideways thereof, and further be situated at any arbitrary feasible predeterminable distance from the vehicle 2 such as ranging from within less than a meter from the vehicle 2 up to tens or even hundreds of meters therefrom, meanwhile at least to some extent - and/or fully - encompassing its corresponding zone 3. Furthermore, the at least first extended zone 311 may further be enlarged in view of the at least first zone 31 to different extent in said longitudinal direction as compared to said lateral direction, as deemed suitable and/or applicable for the situation at hand.

The phrase "evaluating for one or more of said surrounding detecting sensors" may refer to "assessing and/or analyzing for one or more of said surrounding detecting sensors", and according to an example further to "evaluating for one or more of said surrounding detecting sensors in their respective sensor/modality-specific data buffers", "evaluating, e.g. with support from and/or utilizing a respective sensor/modality-specific free-space validator module, for one or more of said surrounding detecting sensors" and/or "evaluating, e.g. using predeterminable verification algorithms, for one or more of said surrounding detecting sensors". "Their respective obtained sensor data separately", on the other hand, may refer to "their respective obtained sensor data individually and/or irrespective of one another", "respective sensor- and/or modality-specific obtained sensor data separate from one another" and/or "at least a portion of their respective obtained sensor data separately", whereas "to encounter potential sensor-specific detections" may refer to "to find potential sensor-specific detections", "to encounter potential sensor/modality-specific detections", "to encounter potential sensor-specific object detections" and/or "to encounter potential detections detected by a specific sensor and/or sensor-specific modality". Furthermore, "in an at least first extended zone" may refer to "in an extended zone", "in an at least first predeterminable extended zone", "in an at least first expanded and/or enlarged zone", and according to an example further to "in an at least first circumstances-dependent, velocity vector-dependent, vehicle velocity-dependent, encountered object velocity-dependent and/or compute capacity-dependent extended zone". The phrase "at least partly encompassing said at least first zone", on the other hand, may refer to "at least to some extent encompassing said at least first zone", "at least partly overlapping and/or covering said at least first zone", and according to an example further to "fully encompassing said at least first zone". Moreover, "extended zone" may refer to "virtual extended zone", "extended state zone" and/or "extended zone of a state space".

As illustrated in an exemplifying manner in exemplifying Figs. 1 and 2, the free-space verification system 1 is further - e.g. by means of a **verification determining unit** 105 - adapted and/or configured for determining when respective potential sensor-specific detections within the at least first extended zone 311, for a predeterminable number of and/or combination of the surrounding detecting sensors 23, comply with at least a first free-space verifying criterium, that the at least first zone 31 is verified as object-free. Thereby, provided that - for a sufficient number of surrounding detecting sensors 23 and/or for a sufficient combination of surrounding detecting sensors 23 - respective sensor's 231, 23n extended zone-related potential object detections fulfill one or more criteria stipulating conditions under which - for the corresponding surrounding detecting sensor 231, 23n and/or sensor-specific modality - the at least first zone 31 is deemed object-free, then there is concluded - in a joint decision from the free-space verification system 1 - that the at least first zone 31 is verified free from objects. That is, should the outcome of assessing the sensor-specific potential object detections - in view of the at least first free-space verifying criterium - for separate surrounding detecting sensors 231, 23n individually, be that said at least first zone 31 is deemed to - for at least the predeterminable number and/or combination of surrounding detecting sensors 231, 23n separately - be free of objects, then the free-space verification system 1 may verify that as true. Accordingly, confidence may be provided for when a perception system 22 perceives - and potentially reports to potential consumer(s) such as e.g. a decision and control module - non-presence of objects, with the free-space verification system 1 providing the ability to with support from a voting schema of sorts confirm whether it agrees or not with that such is the case by assessing respective history sensor data 2310, 23n0 for different surrounding detecting sensors 231, 23n individually, as described herein.

The predeterminable number of and/or combination of the surrounding detecting sensors 23, for which - in order for the at least first zone 31 to be verified as object-free - respective potential sensor-specific detections within the at least first extended zone 311 need to comply with the at least first free-space verifying criterium - herein referred to as voting schema - may be set in any arbitrary feasible manner. Said predeterminable number may accordingly range from a single surrounding detecting sensor 23 and/or sensor-specific modality up to plural thereof and/or tens or more thereof, for instance constituting a predeterminable portion of all surrounding detecting sensors 23 and/or sensor-specific modalities, and similarly, said predeterminable combination may be represented by any arbitrary feasible constellation of surrounding detecting sensors 23 and/or sensor-specific modalities, for instance as deemed suitable for the implementation at hand. Said number and/or combination may accordingly for instance respectively be zone-dependent, sensor-dependent, sensor modality-dependent and/or consumer-dependent. Accordingly, any arbitrary feasible voting schema may be defined and/or implemented as deemed suitable for the implementation at hand. For instance, if one surrounding detecting sensor 23 and/or sensor type is considered more reliable than other surrounding detecting sensors 23 and/or sensor types when it comes to not missing detection of any objects, that superior surrounding detecting sensor 23 and/or sensor type may be defined to be weighted and/or to have veto. Moreover, the voting schema may further differ with differing object type classes, and further from one zone 3 in the vehicle surroundings to another.

The phrase "determining [...] that said at least first zone is verified as object-free" may refer to "concluding [...] that said at least first zone is verified as object-free" and/or "determining [...] that said at least first zone is validated and/or confirmed as object-free", and according to an example further to "determining, e.g. with support from a voting module and/or zone-specific voting module, [...] that said at least first zone is verified as object-free". Furthermore, the phrase "as object-free" may refer to "as free of, empty of and/or void from objects". "When respective potential sensor-specific detections [...] comply with", on the other hand, may refer to "provided that and/or should respective potential sensor-specific detections [...] comply with", "when respective potential sensor-specific detections [...] fulfils and/or agrees with" and/or "when potential detections from separate surrounding detecting sensors and/or sensor-specific modalities [...] comply with", whereas "detections within said at least first extended zone" may refer to "detections valid for and/or pertinent said at least first extended zone". Moreover, "for a predeterminable number of and/or combination of the surrounding detecting sensors" may refer to "for a predeterminable number of and/or for a predeterminable combination of the surrounding detecting sensors", and according to an example further to "for a predeterminable zone-dependent, sensor-dependent, sensor modality-dependent and/or consumer-dependent number of and/or combination of the surrounding detecting sensors". The phrase "at least a first free-space verifying criterium", on the other hand, may refer to "at least a first predeterminable free-space verifying criterium", "respective at least a first free-space verifying criterium", "respective sensor-specific - and/or sensor modality-specific - at least a first free-space verifying criterium" and/or "at least a first criterium stipulating one or more conditions under which, for the corresponding surrounding detecting sensor and/or sensor-specific modality, said at least first zone is deemed object-free".

Differing one or more free-space verifying criteria may be implemented for differing surrounding detecting sensors 23 and/or sensor types, and may further differ for differing zones 3 in the vehicle surrounding, for instance as deemed suitable for the implementation at hand. Moreover, the at least first free-space verifying criterium may be represented by any feasible one or more criteria and/or thresholds stipulating conditions and/or limits for when, for a specific surrounding detecting sensor and/or sensor-specific modality, the at least first zone 31 is deemed object-free. Optionally, the at least first free-space verifying criterium may comprise and/or stipulate existence in the at least first extended zone 311 - e.g. during a predeterminable time range and/or for a predeterminable number of samples - of fewer than a predeterminable minimum number of object detections. Thereby, should there in the historical sensor data 230 pertinent the at least first extended zone 311 for a specific sensor 23 and/or sensor-specific modality be encountered less than said minimum number of object detections or even none thereof - for instance during said time range and/or for said number of samples - which in turn may implicate and/or be interpreted as non-presence of objects, then the at least first free-space criterium is fulfilled for that specific surrounding detecting sensor 23 and/or sensor-specific modality, thus rendering the at least first zone 31 confirmed free from objects in view of that specific sensor 23 and/or sensor-specific modality. In such a case, according to an example, it may not be necessary to consider that specific surrounding detecting sensor's 23 potential object detections in view of any further potential free-space verification criterium. Should, however, the opposite prove to be true for said specific surrounding detecting sensor(s) 23 - i.e. that at least said minimum number of object detections exist in the at least first extended zone 311 e.g. during said time range and/or number of samples for that specific sensor 23 and/or sensor-specific modality - then said object detections may need to be considered in view of one or more further and/or different free-space verifying criteria.

Accordingly, further optionally, the at least first free-space verifying criterium may additionally or alternatively comprise - for instance referred to as a second free-space verification criterium - existence in the at least first extended zone 311 - e.g. during said time range and/or for said number of samples - of at least said minimum number of detections but which detections are not within a predeterminable maximum proximity signifying a single object. Thereby, should there in the historical sensor data 230 pertinent the at least first extended zone 311 for a specific sensor 23 and/or sensor-specific modality be encountered at least said minimum number of object detections which in turn may implicate and/or be interpreted as presence of objects - however with said object detections not being sufficiently close to one another to implicate and/or be interpreted as one and the same object - then this e.g. second free-space criterium is fulfilled for that specific surrounding detecting sensor 23 and/or sensor-specific modality, thus rendering the at least first zone 31 confirmed free from objects in view of that specific sensor 23 and/or sensor-specific modality. Should, however, the opposite prove to be true for said specific surrounding detecting sensor(s) 23 - i.e. that the at least said minimum number of object detections exist in the at least first extended zone 311 for that specific sensor 23 and/or sensor-specific modality and which detections are within said maximum proximity signifying a single object - then said object detections may need to be considered in view of one or more yet further and/or different free-space verifying criteria.

Accordingly, further optionally, the at least first free-space verifying criterium may additionally or alternatively comprise - for instance referred to as a third free-space verification criterium - existence in the at least first extended zone 311 of at least said minimum number of detections out of which a predeterminable number of the detections are within said maximum proximity signifying a single object but which detections imply that a current - or an essentially current - position of said single object lies not within the at least first zone 31. Thereby, should there in the historical sensor data 230 pertinent the at least first extended zone 311 for a specific sensor 23 and/or sensor-specific modality be encountered at least said minimum number of object detections - which in turn may implicate and/or be interpreted as presence of objects - out of which a sufficient number of object detection are sufficiently close to one another to implicate and/or be interpreted as one and the same object - however with the sufficiently close object detections being deemed to implicate that a current position pertinent said one and the same object is outside of the at least first zone 31 - then this e.g. third free-space criterium is fulfilled for that specific surrounding detecting sensor 23 and/or sensor-specific modality, thus rendering the at least first zone 31 confirmed free from objects in view of that specific sensor 23 and/or sensor-specific modality. Should, however, the opposite prove to be true for said specific surrounding detecting sensor(s) 23 - i.e. that the at least said minimum number of object detections exist in the at least first extended zone 311 for that specific sensor 23 and/or sensor-specific modality out of which a predeterminable number of the detections are within said maximum proximity signifying a single object and which detections imply - e.g. from assessing movements of said single object in the at least first extended zone 311 - that a current position of said single object does and/or may lie within the at least first zone, then the at least first zone 31 may **not** be confirmed free from objects in view of that specific sensor 23 and/or sensor-specific modality. Accordingly, should that be the case for sufficiently many and/or a sufficient constellation of the surrounding detecting sensors 23, then it may not be determined according to the voting schema that the at least first zone 31 is verified as object-free.

Accordingly, optionally, determining that the at least first zone 31 is verified as object-free may thus comprises that said at least first zone 31 otherwise is **not** verified as object-free. Thereby, not only may the free-space verification system 1 verify that the at least first zone 31 is verified as free from objects when it - in its joint decision - has concluded that to be the case, it may additionally indicate when the joint decision has concluded that **not** to be the case. Accordingly, the free-space verification system may further e.g. communicate and/or signal that the at least first zone 31 is **not** verified object-free, when there is concluded according to the joint decision that there nonetheless potentially may be object(s) in the at least first zone 31 albeit the perception system 22 perceiving the at least first zone 31 free from objects. Accordingly, the free-space verification system 1 may assist in avoidance of said perception system 22 missing - and/or failing to report e.g. to a consumer of its output such as a decision and control module - presence of objects e.g. critical objects, a situation which may be referred to as false negative scenario. That is, there may thus be supported ensuring that objects within relevant regions in vicinity of the vehicle 2 - e.g. present on a road on which said vehicle 2 may be traveling - are not missed.

The predeterminable minimum number of object detections may be set to any arbitrary feasible number, e.g. ranging from a single detection up to several, tens or even more, for instance depending on sensor type of the surrounding detecting sensor 23, confidence in that specific sensor 23 and/or sensor type, requirement pertinent a potential consumer of the perception system's 22 output, etc. In a similar manner, for instance depending on sensor modality and/or compute capacity, the optional predeterminable time range pertinent existence in the at least first extended zone, may be set to any arbitrary feasible time range such as a few milliseconds up to several seconds and/or more, and further, similarly, the optional predeterminable number of samples pertinent existence in the at least first extended zone, may be set to any arbitrary feasible number such as a single sample up to tens or more thereof. Moreover, the predeterminable maximum proximity signifying a single object may be set to any arbitrary feasible - e.g. object-dependent and/or velocity-dependent - distance not to be exceeded for object detections to be deemed to represent the same object. Similarly, the predeterminable number of detections to be within said maximum proximity, may in a similar manner refer to any arbitrary feasible number, e.g. ranging from a few object detections up to several, tens or even more. Furthermore, the phrase "is not verified as object free" may refer to "is concluded, deemed, signaled and/or communicated not verified as object free"

Optionally, as illustrated in an exemplifying manner in exemplifying Figs. 1 and 2, the free-space verification system 1 may further - e.g. by means of an optional **instruction providing unit 106** - be adapted and/or configured for providing, when the at least first zone 31 is determined **not** verified as object-free, instructions to adapt path planning of the vehicle 2 as if one or more objects are present within the at least first zone 31. Thereby, should the free-space verification system 1 conclude - in its joint decision - that it cannot verify that the at least first zone 31 is free from objects, then there may be communicated - for instance to a decision and control module of the ADS 21 e.g. comprising a path planner, a path planning constraints module and an actuation module - to, albeit the perception system 22 perceiving the at least first zone 31 free from objects, adjust the vehicle's 2 path planning assuming that object(s) nonetheless may be present therein. Subsequently, optionally, the providing of instructions may then further comprise providing instructions to actuate - and/or implement - the adapted path planning. Thereby, the vehicle 2 may be enabled to e.g. reduce speed to stop before reaching the at least first zone 31, initiate one or more - e.g. minimal risk - manoeuvres, and/or switch to a degraded mode in view of the at least first zone 31, as it may not be ruled out that there actually may be presence of object(s) therein. Considering that the perception system 22 may be configured to attempt to find a solution which fulfills demands of all its potential consumers, the introduced concept may enable to check - for a consumer e.g. a decision and control module that may have relatively strict requirements or for plural consumers respectively - that the solution fulfils the demands of that specific consumer. If it cannot be guaranteed that the perception system 22 fulfill the requirements, then the consumer may need to switch to a degraded mode for which the strict requirements is not needed.

The term "providing [...] instructions" may refer to "communicating [...] instructions", and according to an example further to "providing to - e.g. a decision and control of - said ADS [...] instructions". Moreover, "instructions to adapt path planning" may refer to "data comprising instructions to adapt path planning", whereas "as if one or more objects are present" may refer to "assuming presence of object(s)". The phrase "when said at least first zone is determined **not** verified as object-free", on the other hand, may refer to "following and/or upon said at least first zone is determined not verified as object-free". Furthermore, "instructions to actuate the adapted path planning" may refer to "data comprising instructions to actuate the adapted path planning" and/or "instructions to implement and/or carry out the adapted path planning".

As further shown in Fig. 2, the free-space verification system 1 comprises a sensor data obtaining unit 101, a perception data generating unit 102, a free-space determining unit 103, an evaluating unit 104, a verification determining unit 105 and an optional instruction providing unit 106, all of which already have been described in greater detail above. Furthermore, the embodiments herein for supporting and/or providing confidence in that a perception system 22 of an ADS 21 of a vehicle 2 detects presence of objects, may be implemented through one or more processors, such as a **processor 107,** for instance represented by at least a first Central Processing Unit, CPU, and/or at least a first Graphics Processing Unit, GPU, together with computer program code for performing the functions and actions of the embodiments herein. Said program code may also be provided as a computer program product, for instance in the form of a data carrier carrying computer program code for performing the embodiments herein when being loaded into the free-space verification system 1. One such carrier may be in the form of a CD/DVD ROM disc and/or a hard drive, it is however feasible with other data carriers. The computer program code may furthermore be provided as pure program code on a server and downloaded to the free-space verification system 1. The free-space verification system 1 may further comprise a **memory 108** comprising one or more memory units. The memory 108 optionally includes high-speed random access memory, such as DRAM, SRAM, DDR RAM, or other random access solid-state memory devices, and further optionally includes non-volatile memory, such as one or more magnetic disk storage devices, optical disk storage devices, flash memory devices, or other non-volatile solid-state storage devices. Moreover, the memory 108 may be arranged to be used to store e.g. information, and further to store data, configurations, scheduling, and applications, to perform the methods herein when being executed in the free-space verification system 1. For instance, the computer program code may be implemented in the firmware, stored in FLASH memory 108, of an embedded processor 107, and/or downloaded wirelessly e.g. from an off-board server. Furthermore, units 101-106, the optional processor 107 and/or the optional memory 108, may at least partly be comprised in one or more **nodes 109** e.g. ECUs of the vehicle 2, e.g. in and/or in association with the ADS 21. Those skilled in the art will also appreciate that said units 101-106 described above as well as any other unit, interface, system, controller, module, device, element, feature, or the like described herein may refer to, comprise, include, and/or be implemented in or by a combination of analog and digital circuits, and/or one or more processors configured with software and/or firmware, e.g. stored in a memory such as the memory 108, that when executed by the one or more processors such as the processor 107 perform as described herein. One or more of these processors, as well as the other digital hardware, may be included in a single Application-Specific Integrated Circuitry, ASIC, or several processors and various digital hardware may be distributed among several separate components, whether individually packaged or assembled into a System-on-a-Chip, SoC.

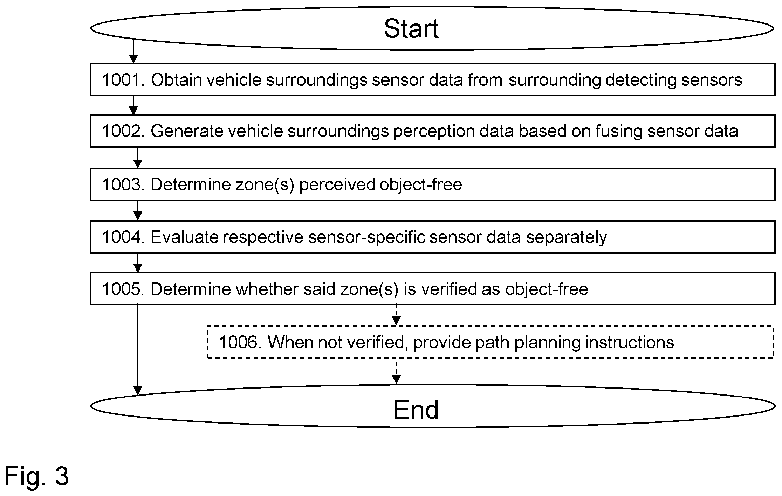

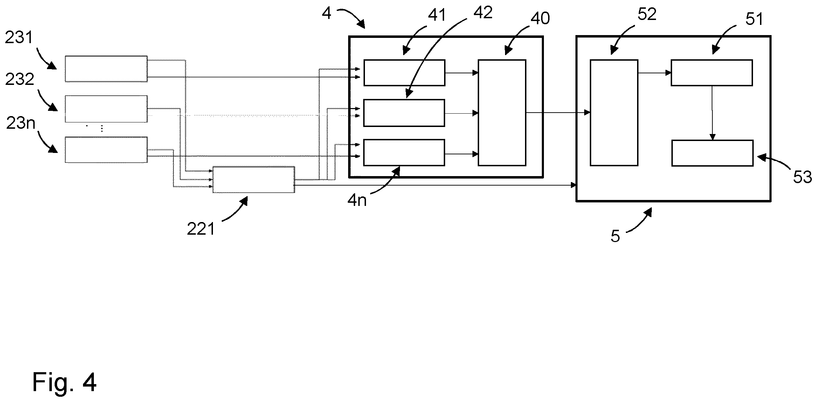

**Fig. 3** is a flowchart depicting an exemplifying method performed by a free-space verification system 1 according to embodiments of the disclosure. Said method is for supporting and/or providing confidence in that a perception system 22 of an ADS 21 of a vehicle 2 detects presence of objects. The exemplifying method, which may be continuously repeated, comprises one or more of the following actions discussed with support from Figs. 1-2, and further with support from Fig. 4 which will be described in greater detailed further on.

### Action 1001

In Action 1001, the free-space verification system 1 obtains - e.g. with support from the sensor data obtaining unit 101 - sensor data 230 of vehicle surroundings with support from vehicle-mounted surrounding detecting sensors 23.

### Action 1002

In Action 1002, the free-space verification system 1 generates - e.g. with support from the perception data generating unit 102 - perception data 220 of vehicle surroundings based on fusing the sensor data 230 with support from the perception system 22.

### Action 1003

In Action 1003, the free-space verification system 1 determines - e.g. with support from the free-space determining unit 103 - that the perception system 22 based on the perception data 220 perceives at least a first zone 31 in the vehicle surroundings, free from objects.

### Action 1004

In Action 1004, the free-space verification system 1 evaluates - e.g. with support from the evaluating unit 104 - for one or more of the surrounding detecting sensors 23, 231, 23n their respective obtained sensor data 2310, 23n0 separately, to encounter potential sensor-specific detections in an at least first extended zone 311 at least partly encompassing the at least first zone 31.

Optionally, Action 1004 of evaluating may comprise - and/or the evaluating unit 104 may be configured and/or adapted for - evaluating respective obtained sensor data 2310, 23n0 ranging back a respective predeterminable time period and/or respective predeterminable number of samples.

### Action 1005

In Action 1005, the free-space verification system 1 determines - e.g. with support from the verification determining unit 105 - when respective potential sensor-specific detections within the at least first extended zone 311 for predeterminable number of and/or combination of the surrounding detecting sensors 23 ,comply with at least a first free-space verifying criterium, that the at least first zone 31 is verified as object-free.

Optionally, Action 1005 of determining that the at least first zone 31 is verified as object-free may comprise - and/or the verification determining unit 105 may be adapted and/or configured for - that the at least first zone 31 otherwise is **not** verified as object-free.

Furthermore, optionally, the at least first free-space verifying criterium may comprise existence in the at least first extended zone 311 of fewer than a predeterminable minimum number of detections. Additionally or alternatively, the at least first free-space verifying criterium may comprise existence in the at least first extended zone 311 of at least said minimum number of detections but which detections are not within a predeterminable maximum proximity signifying a single object. Furthermore, additionally or alternatively, the at least first free-space verifying criterium may comprise existence in the at least first extended zone 311 of at least said minimum number of detections out of which a predeterminable number of the detections are within said maximum proximity signifying a single object but which detections imply that a current position of said single object lies not within the at least first zone 31.

### Action 1006

In optional Action 1006, the free-space verification system 1 may provide - e.g. with support from the optional instruction providing unit 106 - when the at least first zone 31 is determined **not** verified as object-free, instructions to adapt path planning of the vehicle 2 as if one or more objects are present within the at least first zone 31.

Optionally, Action 1006 of providing instructions to adapt path planning may comprise - and/or the optional instruction providing unit 106 may be configured and/or adapted for - providing instructions to actuate the adapted path planning.

**Fig. 4** illustrates a schematic block diagram of an exemplifying setup supporting an exemplifying free-space verification system 1 according to embodiments of the disclosure. A first 231, a **second 232** and an n^{th} surrounding detecting sensor are in an exemplifying manner depicted to respectively provide input - comprising respective potential historical object detections - to an exemplifying **validator 4** dedicated and/or designed for a first zone 31 of the vehicle surroundings. Additionally, a **fusion module 221** of a perception system 22 - which also may be referred to as a perception module - is depicted to optionally provide its output - comprising perception data 220 - to the validator 4. It may be noted that a validator 4 may be designed differently for different zones 3. The exemplifying validator 4 here comprises sensor-specific **free-space validator modules 41, 42, 4n** - one for each surrounding detecting sensor 231, 232, 23n - respectively adapted to individually assess whether the at least first zone 31 is free from object(s) in view of historical potential object detections of its corresponding surrounding detecting sensor 231, 232, 23n. The output from respective surrounding detecting sensor 231, 232, 23n is input to an - in the validator 4 comprised - exemplifying **voting module 40,** which may also be referred to as a voting block and/or validation voter. In exemplifying Fig. 4, given the input from the validator modules 41, 42, 4n, the voting module 40 forms - based on any predeterminable voting schema among the validators 41, 42, 4n as described herein - a joint decision whether or not the at least first zone 31 may be verified free from objects. That is, there may be confirmed and/or verified in view of respective surrounding detecting sensor 231, 232, 23n whether the at least first zone 31 is free from objects, but the joint decision is taken by the voting module 40. It may be noted that a voting module 40 may be designed differently for different zones 3. Further depicted is a consumer of the objects from the fusion module 221 and the validator 4, here represented by an exemplifying **decision and control module 5** governing vehicle path planning, here comprising a **path planner 51, a path planning constraints module 52** and an **actuation module 53.**

In exemplifying Fig. 4, the validator modules 41, 42, 4n individually evaluates - e.g. utilizing one or more verification algorithms - the sensor data 230 of the corresponding surrounding detecting sensor 231, 232, 23n pertinent an at least first extended version 311 of the at least first zone 31. The exemplifying validator modules 41, 42, 4n may respectively store and/or buffer all detections in the at least first extended zone 311 pertinent its corresponding surrounding detecting sensor 231, 232, 23n. It is here assumed that a potential object in the at least first zone 31 cannot have been outside of the at least first extended zone 311 during a predeterminable number of seconds T, provided its velocity vector being within a given range. In exemplifying Fig. 4, to verify that the fusion module 221 has not missed any object in the at least first zone 31 having velocity vector less than a specified range, the following requirement may be set on respective surrounding detecting sensor 231, 232, 23n: if a non-occluded object with velocity vector within a specified range is in the at least first extended zone 311 for a duration exceeding T seconds, then at least R unique detections - by an individual surrounding detecting sensor 231, 232, 23n - shall be made of the object, e.g. with an accuracy within a predeterminable threshold. When it is reported from the fusion module 221 that the at lest first zone 31 is empty of objects, then the respective validator modules 41, 42, 4n may individually check whether more than R detections have been in the at least first extended zone 311. If a validator module 41, 42, 4n is unable to identify more than R detections pertinent its corresponding surrounding detecting sensor 231, 232, 23n, then that validator module 41, 42, 4n confirms and/or validates the at least first zone 31 as free from objects. If, on the other hand, more than R detections exists within the at least first extended zone 311, then a check is made to see whether any R detections could correspond to a single object. Finally, if there are R detections which could correspond to a single object, a check is made to see whether the current position of the object could be in the at least firs zone 31. If that is the case, then the at least first zone 31 is **not** confirmed and/or validated as object-free by that validator module 41, 42, 4n.

For instance, the stopping distance of a vehicle 2 driving at e.g. 60 km/h is roughly 20 meters when performing an emergency stop. To provide adequate margin, an exemplifying pedestrian in the middle of the road must be detected when he or she is 30 meters away. If the pedestrian is moving in the opposite direction to the vehicle 2, then 0.6 seconds earlier he or she would be 11 meters further away. If the at least first zone 31 for instance then is defined to in an essentially longitudinal direction of the vehicle 2 originate 30 meters ahead of the vehicle 2 and extend for 10 meters, then the at least first extended zone 311 may be defined to correspondingly originate 30 meters ahead of the vehicle 2, but extend for 21 meters, and additionally be e.g. 0.8 meters wider in an essentially lateral direction of the vehicle 2 at the furthest point. For instance, a surrounding detecting sensor 23 represented by a camera, taking images at e.g. 10 frames per second, would then produce six frames during the 0.6 seconds. If the requirement on the camera is that at least three detections shall be made within 0.6 seconds for an actual object, the occurrence of three or more detections in sensor data 230 pertinent said camera requires further analysis. If three or more detections exist, but no object is reported from the fusion module 221, then each detection is compared with the detections in the other time samples pertinent the camera. If any two detections could originate from the same object, then an additional check is made to see whether there exists a third detection which matches with both. Finally, a last check is performed to check whether based on the matching detections, a corresponding object could be in the at least first zone 31 and not just in the at least extended zone 311. If three detections exist which fulfil these criteria, then the at least first zone 31 cannot be confirmed and/or validated as free by the corresponding validator module 41, 42, 4n. If a sufficient number of the other validator modules 41, 42, 4n cannot confirm and/or validate the at least first zone 31 either, then the at least first zone 31 is **not** verified as object-free. In that case, the decision & control module 5 must assume that a pedestrian is somewhere in this zone 31 and must accordingly reduce speed to stop before reaching this zone 31 and/or make some other - e.g. minimal risk - manoeuvre.

## Claims

1. A method performed by a free-space verification system (1) for supporting and/or providing confidence that a perception system (22) of an Automated Driving System, ADS (21), of a vehicle (2) accurately detects the presence of objects, said method comprising:
***obtaining*** (1001) sensor data (230) of vehicle surroundings with support from vehicle-mounted surrounding detecting sensors (23);
***generating*** (1002) perception data (220) of vehicle surroundings by fusing said sensor data (230) with support from said perception system (22);
***determining*** (1003) that the perception system (22), by assessing said perception data (220), perceives at least a first predeterminable zone (31) in the vehicle surroundings as free from critical objects;
***evaluating*** (1004) separate from one another, the sensor data (2310, 23n0) obtained from one or more of said surrounding detecting sensors (23), to encounter potential sensor-specific detections in an at least first predeterminable extended zone (311) at least partly encompassing said at least first zone (31);
***determining*** (1005) individually pertinent respective surrounding detecting sensors (23) or sensor-specific modality, whether potential sensor-specific detections within said at least first extended zone (311) comply with at least a first free-space verifying criterium stipulating one or more conditions under which said at least first zone is deemed object-free; and
***determining*** (1005) when compliance for a predefined number and/or combination of the surrounding detecting sensors (23), that said at least first zone (31) is verified as object-free,
wherein said at least first free-space verifying criterium comprises:
existence in the at least first extended zone (311) of fewer than a predeterminable minimum number of detections; and/or
existence in the at least first extended zone (311) of at least said minimum number of detections but which detections are not within a predeterminable maximum proximity signifying a single object; and/or
existence in the at least first extended zone (311) of at least said minimum number of detections out of which a predeterminable number of the detections are within said maximum proximity signifying a single object but which detections imply that a current position of said single object lies not within the at least first zone (31).

2. The method according to claim 1, wherein said ***determining*** (1005) that said at least first zone (31) is verified as object-free comprises that said at least first zone (31) otherwise is not verified as object-free.

3. The method according to claim 2, further comprising:
***providing*** (1006), when said at least first zone (31) is determined not verified as object-free, instructions to adapt path planning of said vehicle (2) as if one or more objects are present within said at least first zone (31).

4. The method according to claim 3, wherein said ***providing*** (1006) instructions to adapt path planning further comprises providing instructions to actuate the adapted path planning.

5. The method according to any one of claims 1-4, wherein said ***evaluating*** (1004) comprises evaluating respective obtained sensor data (2310, 23n0) ranging back a respective predeterminable time period and/or respective predeterminable number of samples.

6. A **free-space verification system** (1) for supporting and/or providing confidence that a perception system (22) of an Automated Driving System, ADS (21), of a vehicle (2) accurately detects the presence of objects, said free-space verification system (1) comprising:
a **sensor data obtaining unit** (101) for ***obtaining*** (1001) sensor data (230) of vehicle surroundings with support from vehicle-mounted surrounding detecting sensors (23);
a **perception data generating unit** (102) for ***generating*** (1002) perception data (220) of vehicle surroundings by fusing said sensor data (230) with support from said perception system (22);
a **free-space determining unit** (103) for ***determining*** (1003) that the perception system (22), by assessing said perception data (220), perceives at least a first predeterminable zone (31) in the vehicle surroundings as free from critical objects;
an **evaluating unit** (104) for ***evaluating*** (1004) separate from one another, the sensor data (2310, 23n0) obtained from one or more of said surrounding detecting sensors (23), to encounter potential sensor-specific detections in an at least first predeterminable extended zone (311) at least partly encompassing said at least first zone (31); and
a **verification determining unit** (105) for ***determining*** (1005) individually pertinent respective surrounding detecting sensors (23) or sensor-specific modality, whether potential sensor-specific detections within said at least first extended zone (311) comply with at least a first free-space verifying criterium stipulating one or more conditions under which said at least first zone is deemed object-free; said verification determining unit (105) further being adapted for ***determining*** (1005) when compliance for a predefined number and/or combination of the surrounding detecting sensors (23), that said at least first zone (31) is verified as object-free,
wherein said at least first free-space verifying criterium comprises:
existence in the at least first extended zone (311) of fewer than a predeterminable minimum number of detections; and/or
existence in the at least first extended zone (311) of at least said minimum number of detections but which detections are not within a predeterminable maximum proximity signifying a single object; and/or
existence in the at least first extended zone (311) of at least said minimum number of detections out of which a predeterminable number of the detections are within said maximum proximity signifying a single object but which detections imply that a current position of said single object lies not within the at least first zone (31).

7. The free-space verification system (1) according to claim 6, wherein said verification determining unit (105) is adapted for determining that said at least first zone (31) otherwise is not verified as object-free.

8. The free-space verification system (1) according to claim 7, further comprising:
an **instruction providing unit** (106) for ***providing*** (1006), when said at least first zone (31) is determined **not** verified as object-free, instructions to adapt path planning of said vehicle (2) as if one or more objects are present within said at least first zone (31).

9. The free-space verification system (1) according to claim 8, wherein said instruction providing unit (1006) is adapted for further providing instructions to actuate the adapted path planning.

10. The free-space verification system (1) according to any one of claims 6-9, wherein said evaluating unit (1004) is adapted for evaluating respective obtained sensor data (2310, 23n0) ranging back a respective predeterminable time period and/or respective predeterminable number of samples.

11. A **vehicle** comprising a free-space verification system (1) according to any one of claims 6-10.

12. A computer program product comprising a computer program containing computer program code means arranged to cause a computer or a processor to execute the steps of a method according to any of claims 1-5, stored on a computer-readable medium or a carrier wave.

13. A non-volatile computer readable storage medium having stored thereon the computer program product of claim 13.

## Patentansprüche

1. Verfahren, das durch ein Freiraumverifikationssystem (1) zum Unterstützen und/oder Bereitstellen von Zuversicht, dass ein Wahrnehmungssystem (22) eines automatisierten Fahrsystems, ADS (21), eines Fahrzeugs (2) das Vorhandensein von Objekten korrekt detektiert, durchgeführt wird, wobei das Verfahren Folgendes umfasst:
***Erlangen*** (1001) von Sensordaten (230) einer Fahrzeugumgebung mit Unterstützung von an dem Fahrzeug montierten Umgebungsdetektionssensoren (23);
***Erzeugen*** (1002) von Wahrnehmungsdaten (220) einer Fahrzeugumgebung durch Verschmelzen der Sensordaten (230) mit Unterstützung von dem Wahrnehmungssystem (22);
***Bestimmen*** (1003), dass das Wahrnehmungssystem (22), durch Beurteilen der Wahrnehmungsdaten (220), mindestens eine erste vorbestimmbare Zone (31) in der Fahrzeugumgebung als frei von kritischen Objekten wahrnimmt;
***Auswerten*** (1004), getrennt voneinander, der Sensordaten (2310, 23n0), die von einem oder mehreren der Umgebungsdetektionssensoren (23) erlangt wurden, um potenzielle sensorspezifische Detektionen in einer mindestens ersten vorbestimmbaren erweiterten Zone (311), die mindestens teilweise die mindestens erste Zone (31) umschließt, aufzufinden;
***Bestimmen*** (1005) von individuell relevanten jeweiligen Umgebungsdetektionssensoren (23) oder sensorspezifischer Modalität, ob potenzielle sensorspezifische Detektionen innerhalb der mindestens ersten erweiterten Zone (311) mindestens ein erstes Kriterium zum Verifizieren eines Freiraums, das eine oder mehrere Bedingungen nennt, unter denen die mindestes erste Zone als objektfrei gilt, erfüllen; und
***Bestimmen*** (1005), bei Erfüllung für eine vordefinierte Anzahl und/oder Kombination der Umgebungsdetektionssensoren (23), dass die mindestens erste Zone (31) als objektfrei verifiziert ist,
wobei das mindestens erste Kriterium zum Verifizieren eines Freiraums Folgendes umfasst:
Existenz, in der mindestens ersten erweiterten Zone (311), von weniger als einer vorbestimmbaren Mindestanzahl von Detektionen; und/oder
Existenz, in der mindestens ersten erweiterten Zone (311), von mindestens der Mindestanzahl von Detektionen, wobei diese Detektionen jedoch nicht innerhalb einer vorbestimmbaren Maximalnähe, die ein einzelnes Objekt bedeutet, liegen; und/oder
Existenz, in der mindestens ersten erweiterten Zone (311), von mindestens der Mindestanzahl von Detektionen, von denen eine vorbestimmbare Anzahl der Detektionen innerhalb der Maximalnähe, die ein einzelnes Objekt bedeutet, liegt, wobei diese Detektionen jedoch implizieren, dass eine aktuelle Position des einzelnen Objekts nicht innerhalb der mindestens ersten Zone (31) liegt.

2. Verfahren nach Anspruch 1, wobei das ***Bestimmen*** (1005), dass die mindestens erste Zone (31) als objektfrei verifiziert ist, umfasst, dass die mindestens erste Zone (31) andererseits **nicht** als objektfrei verifiziert ist.

3. Verfahren nach Anspruch 2, das ferner Folgendes umfasst:
***Bereitstellen*** (1006), wenn die mindestens erste Zone (31) als **nicht** als objektfrei verifiziert bestimmt ist, von Anweisungen, eine Wegplanung des Fahrzeugs (2) so anzupassen, als ob ein oder mehrere Objekte in der mindestens ersten Zone (31) vorhanden sind.

4. Verfahren nach Anspruch 3, wobei das ***Bereitstellen*** (1006) von Anweisungen, die Wegplanung anzupassen, ferner Bereitstellen von Anweisungen, die angepasste Wegplanung umzusetzen, umfasst.

5. Verfahren nach einem der Ansprüche 1-4, wobei das ***Auswerten*** (1004) Auswerten jeweiliger erlangter Sensordaten (2310, 23n0), die einen jeweiligen vorbestimmbaren Zeitraum zurückreichen, und/oder einer jeweiligen vorbestimmbaren Anzahl von Proben umfasst.

6. **Freiraumverifikationssystem** (1) zum Unterstützen und/oder Bereitstellen von Zuversicht, dass ein Wahrnehmungssystem (22) eines automatisierten Fahrsystems, ADS (21), eines Fahrzeugs (2) das Vorhandensein von Objekten korrekt detektiert, wobei das Freiraumverifikationssystem (1) Folgendes umfasst:
eine **Sensordatenerlangungseinheit** (101) zum ***Erlangen*** (1001) von Sensordaten (230) einer Fahrzeugumgebung mit Unterstützung von an dem Fahrzeug montierten Umgebungsdetektionssensoren (23);
eine **Wahrnehmungsdatenerzeugungseinheit** (102) zum ***Erzeugen*** (1002) von Wahrnehmungsdaten (220) einer Fahrzeugumgebung durch Verschmelzen der Sensordaten (230) mit Unterstützung von dem Wahrnehmungssystem (22);
eine **Freiraumbestimmungseinheit** (103) zum ***Bestimmen*** (1003), dass das Wahrnehmungssystem (22), durch Beurteilen der Wahrnehmungsdaten (220), mindestens eine erste vorbestimmbare Zone (31) in der Fahrzeugumgebung als frei von kritischen Objekten wahrnimmt;
eine **Auswertungseinheit** (104) zum ***Auswerten** (1004),* getrennt voneinander, der Sensordaten (2310, 23n0), die von einem oder mehreren der Umgebungsdetektionssensoren (23) erlangt wurden, um potenzielle sensorspezifische Detektionen in einer mindestens ersten vorbestimmbaren erweiterten Zone (311), die mindestens teilweise die mindestens erste Zone (31) umschließt, aufzufinden; und
eine **Verifikationsbestimmungseinheit** (105) zum ***Bestimmen*** (1005) von individuell relevanten jeweiligen Umgebungsdetektionssensoren (23) oder sensorspezifischer Modalität, ob potenzielle sensorspezifische Detektionen innerhalb der mindestens ersten erweiterten Zone (311) mindestens ein erstes Kriterium zum Verifizieren eines Freiraums, das eine oder mehrere Bedingungen nennt, unter denen die mindestes erste Zone als objektfrei gilt, erfüllen; wobei die Verifikationsbestimmungseinheit (105) ferner zum ***Bestimmen*** (1005), bei Erfüllung für eine vordefinierte Anzahl und/oder Kombination der Umgebungsdetektionssensoren (23), dass die mindestens erste Zone (31) als objektfrei verifiziert ist, angepasst ist,
wobei das mindestens erste Kriterium zum Verifizieren eines Freiraums Folgendes umfasst:
Existenz, in der mindestens ersten erweiterten Zone (311), von weniger als einer vorbestimmbaren Mindestanzahl von Detektionen; und/oder
Existenz, in der mindestens ersten erweiterten Zone (311), von mindestens der Mindestanzahl von Detektionen, wobei diese Detektionen jedoch nicht innerhalb einer vorbestimmbaren Maximalnähe, die ein einzelnes Objekt bedeutet, liegen; und/oder
Existenz, in der mindestens ersten erweiterten Zone (311), von mindestens der Mindestanzahl von Detektionen, von denen eine vorbestimmbare Anzahl der Detektionen innerhalb der Maximalnähe, die ein einzelnes Objekt bedeutet, liegt, wobei diese Detektionen jedoch implizieren, dass eine aktuelle Position des einzelnen Objekts nicht innerhalb der mindestens ersten Zone (31) liegt.

7. Freiraumverifikationssystem (1) nach Anspruch 6, wobei die Verifikationsbestimmungseinheit (105) zum Bestimmen, dass die mindestens erste Zone (31) andererseits **nicht** als objektfrei verifiziert ist, angepasst ist.

8. Freiraumverifikationssystem (1) nach Anspruch 7, das ferner Folgendes umfasst:
eine **Anweisungsbereitstellungseinheit** (106) zum ***Bereitstellen*** (1006), wenn die mindestens erste Zone (31) als **nicht** als objektfrei verifiziert bestimmt ist, von Anweisungen, eine Wegplanung des Fahrzeugs (2) so anzupassen, als ob ein oder mehrere Objekte in der mindestens ersten Zone (31) vorhanden sind.

9. Freiraumverifikationssystem (1) nach Anspruch 8, wobei die Anweisungsbereitstellungseinheit (1006) ferner zum Bereitstellen von Anweisungen, die angepasste Wegplanung umzusetzen, angepasst ist.

10. Freiraumverifikationssystem (1) nach einem der Ansprüche 6-9, wobei die Auswertungseinheit (1004) zum Auswerten jeweiliger erlangter Sensordaten (2310, 23n0), die einen jeweiligen vorbestimmbaren Zeitraum zurückreichen, und/oder einer jeweiligen vorbestimmbaren Anzahl von Proben angepasst ist.

11. **Fahrzeug,** umfassend ein Freiraumverifikationssystem (1) nach einem der Ansprüche 6-10.

12. Computerprogrammprodukt, umfassend ein Computerprogramm, das Computerprogrammcodemittel enthält, die dazu angeordnet sind, einen Computer oder einen Prozessor dazu zu veranlassen, die Schritte eines Verfahrens nach einem der Ansprüche 1-5 auszuführen, gespeichert auf einem computerlesbaren Medium oder einer Trägerwelle.

13. Nichtflüchtiges computerlesbares Speichermedium mit dem darauf gespeicherten Computerprogrammprodukt nach Anspruch 13.

## Revendications

1. Procédé réalisé par un système de vérification d'espace libre (1) pour soutenir et/ou fournir l'assurance qu'un système de perception (22) d'un système de conduite automatisée, ADS (21), d'un véhicule (2) détecte avec précision la présence d'objets, ledit procédé comprenant :
***l'obtention*** (1001) de données de capteur (230) des environs du véhicule avec le soutien de capteurs de détection des environs (23) montés sur le véhicule ;
***la génération*** (1002) de données de perception (220) des environs du véhicule en fusionnant lesdites données de capteur (230) avec le soutien dudit système de perception (22) ;
***la détermination*** (1003) que le système de perception (22), en évaluant lesdites données de perception (220), perçoit au moins une première zone prédéterminable (31) dans les environs du véhicule comme étant exempte d'objets critiques ;
***l'évaluation*** (1004) de manière séparée les unes des autres, des données de capteur (2310, 23n0) obtenues à partir d'une ou plusieurs desdits capteurs de détection des environs (23), pour rencontrer des détections spécifiques aux capteurs potentielles dans au moins une première zone étendue prédéterminable (311) englobant au moins partiellement ladite au moins une première zone (31) ;
***la détermination*** (1005) individuellement pour les capteurs de détection des environs (23) respectifs pertinents ou une modalité spécifique au capteur, si des détections spécifiques au capteur potentielles au sein de ladite au moins une première zone étendue (311) respectent au moins un premier critère de vérification d'espace libre stipulant une ou plusieurs conditions selon lesquelles ladite au moins une première zone est jugée exempte d'objets ; et
***la détermination*** (1005), en cas de conformité pour un nombre et/ou une combinaison prédéfinis des capteurs de détection des environs (23), que ladite au moins une première zone (31) est vérifiée comme étant exempte d'objets,
dans lequel ledit au moins un premier critère de vérification d'espace libre comprend :
l'existence dans l'au moins une première zone étendue (311) de moins d'un nombre minimal prédéterminable de détections ; et/ou
l'existence dans l'au moins une première zone étendue (311) d'au moins ledit nombre minimal de détections mais lesquelles détections ne se trouvent pas dans une proximité maximale prédéterminable signifiant un objet unique ; et/ou
l'existence dans l'au moins une première zone étendue (311) d'au moins ledit nombre minimal de détections parmi lesquelles un nombre prédéterminable de détections se trouvent dans ladite proximité maximale signifiant un objet unique mais lesquelles détections impliquent qu'une position actuelle dudit objet unique ne se situe pas dans l'au moins une première zone (31).

2. Procédé selon la revendication 1, dans lequel ladite ***détermination*** (1005) que ladite au moins une première zone (31) est vérifiée comme étant exempte d'objets comprend que ladite au moins une première zone (31) autrement n'est pas vérifiée comme étant exempte d'objets.

3. Procédé selon la revendication 2, comprenant en outre :
***la fourniture*** (1006), lorsque ladite au moins une première zone (31) est déterminée comme n'étant pas vérifiée comme exempte d'objets, d'instructions pour adapter la planification de trajectoire dudit véhicule (2) comme si un ou plusieurs objets sont présents au sein de ladite au moins une première zone (31).

4. Procédé selon la revendication 3, dans lequel ladite fourniture (1006) d'instructions pour adapter la planification de trajectoire comprend en outre la fourniture d'instructions pour actionner la planification de trajectoire adaptée.

5. Procédé selon l'une quelconque des revendications 1 à 4, dans lequel ladite évaluation (1004) comprend l'évaluation de données de capteur (2310, 23n0) obtenues respectives remontant à une période de temps prédéterminable respective et/ou un nombre d'échantillons prédéterminable respectif.

6. **Système de vérification d'espace libre** (1) pour soutenir et/ou fournir l'assurance qu'un système de perception (22) d'un système de conduite automatisée, ADS (21), d'un véhicule (2) détecte avec précision la présence d'objets, ledit système de vérification d'espace libre (1) comprenant :
**une unité d'obtention de données de capteur** (101) pour ***l'obtention*** (1001) de données de capteur (230) des environs du véhicule avec le soutien de capteurs de détection des environs (23) montés sur le véhicule ;
**une unité de génération de données de perception** (102) pour la ***génération*** (1002) de données de perception (220) des environs du véhicule en fusionnant lesdites données de capteur (230) avec le soutien dudit système de perception (22) ;
**une unité de détermination d'espace libre** (103) pour la ***détermination*** (1003) que le système de perception (22), en évaluant lesdites données de perception (220), perçoit au moins une première zone prédéterminable (31) dans les environs du véhicule comme étant exempte d'objets critiques ;
**une unité d'évaluation** (104) pour ***l'évaluation*** (1004) de manière séparée les unes des autres, des données de capteur (2310, 23n0) obtenues à partir d'une ou plusieurs desdits capteurs de détection des environs (23), pour rencontrer des détections spécifiques aux capteurs potentielles dans au moins une première zone étendue prédéterminable (311) englobant au moins partiellement ladite au moins une première zone (31) ; et
**une unité de détermination de vérification** (105) pour la ***détermination*** (1005) individuellement pour les capteurs de détection des environs (23) respectifs pertinents ou une modalité spécifique au capteur, si des détections spécifiques au capteur potentielles au sein de ladite au moins une première zone étendue (311) respectent au moins un premier critère de vérification d'espace libre stipulant une ou plusieurs conditions selon lesquelles ladite au moins une première zone est jugée exempte d'objets ; ladite unité de détermination de vérification (105) étant en outre adaptée pour ***déterminer*** (1005), en cas de conformité pour un nombre et/ou une combinaison prédéfinis des capteurs de détection des environs (23), que ladite au moins une première zone (31) est vérifiée comme étant exempte d'objets,
dans lequel ledit au moins un premier critère de vérification d'espace libre comprend :
l'existence dans l'au moins une première zone étendue (311) de moins d'un nombre minimal prédéterminable de détections ; et/ou
l'existence dans l'au moins une première zone étendue (311) d'au moins ledit nombre minimal de détections mais lesquelles détections ne se trouvent pas dans une proximité maximale prédéterminable signifiant un objet unique ; et/ou
l'existence dans l'au moins une première zone étendue (311) d'au moins ledit nombre minimal de détections parmi lesquelles un nombre prédéterminable de détections se trouvent dans ladite proximité maximale signifiant un objet unique mais lesquelles détections impliquent qu'une position actuelle dudit objet unique ne se situe pas dans l'au moins une première zone (31).

7. Système de vérification d'espace libre (1) selon la revendication 6, dans lequel ladite unité de détermination de vérification (105) est adaptée pour déterminer que ladite au moins une première zone (31) autrement **n'est** pas vérifiée comme étant exempte d'objets.

8. Système de vérification d'espace libre (1) selon la revendication 7, comprenant en outre :
**une unité de fourniture d'instructions** (106) pour la ***fourniture*** (1006), lorsque ladite au moins une première zone (31) est déterminée comme n'étant pas vérifiée comme exempte d'objets, d'instructions pour adapter la planification de trajectoire dudit véhicule (2) comme si un ou plusieurs objets sont présents au sein de ladite au moins une première zone (31).

9. Système de vérification d'espace libre (1) selon la revendication 8, dans lequel ladite unité de fourniture d'instructions (106) est adaptée pour fournir en outre des instructions pour actionner la planification de trajectoire adaptée.

10. Système de vérification d'espace libre (1) selon l'une quelconque des revendications 6 à 9, dans lequel ladite unité d'évaluation (104) est adaptée pour évaluer des données de capteur (2310, 23n0) obtenues respectives remontant à une période de temps prédéterminable respective et/ou un nombre d'échantillons prédéterminable respectif.

11. Véhicule comprenant un système de vérification d'espace libre (1) selon l'une quelconque des revendications 6 à 10.

12. Produit de programme informatique comprenant un programme informatique contenant des moyens de code de programme informatique agencés pour amener un ordinateur ou un processeur à réaliser les étapes d'un procédé selon l'une quelconque des revendications 1 à 5, stocké sur un support lisible par ordinateur ou une onde porteuse.

13. Support de stockage lisible par ordinateur non volatil sur lequel est stocké le produit de programme informatique de la revendication 13.
